# EUROPÄISCHE PATENTSCHRIFT

(11) **EP 2 794 308 B1**
(45) Veröffentlichungstag und Bekanntmachung des Hinweises auf die Patenterteilung: **07.03.2018**
(21) Anmeldenummer: 12794194.6
(22) Anmeldetag: 20.11.2012
(51) Int. Cl.: B60G 17/052

(54) **LUFTFEDERUNGSANLAGE EINES KRAFTFAHRZEUGS UND VERFAHREN ZU DEREN STEUERUNG**
AIR SUSPENSION SYSTEM OF A MOTOR VEHICLE AND METHOD FOR CONTROLLING SAME
SYSTÈME DE SUSPENSION PNEUMATIQUE POUR UN VÉHICULE AUTOMOBILE ET PROCÉDÉ DE COMMANDE DUDIT SYSTÈME

(30) Priorität: 21.12.2011 DE 102011121756
(43) Veröffentlichungstag der Anmeldung: 29.10.2014
(73) Patentinhaber: WABCO GmbH, 30453 Hannover (DE)
(72) Erfinder: STABENOW, Uwe, 30880 Laatzen (DE)
(74) Vertreter: Lauerwald, Jörg
(86) Internationale Anmeldenummer: PCT/EP2012/004810
(87) Internationale Veröffentlichungsnummer: WO 2013/091758

(56) Entgegenhaltungen:
- DE-C1- 19 944 873
- KR-B1- 101 041 554
- US-A1- 2008 111 337

## Beschreibung

Die Erfindung betrifft eine Luftfederungsanlage eines Kraftfahrzeugs, mit zumindest einem einer Luftfeder mindestens einer Fahrzeugachse zugeordneten Federbalg, der über eine mit einem Niveauregelventil versehene Anschlussleitung mit einer Hauptdruckleitung verbindbar und gegenüber dieser absperrbar ist, wobei die Hauptdruckleitung über eine mit einem Kompressor und einem Lufttrockner versehene Versorgungsleitung belüftbar und über eine zwischen dem Kompressor und dem Lufttrockner abzweigende und mit einem Ablassventil versehene Entlüftungsleitung entlüftbar ist, und bei der optional ein Druckspeicher vorgesehen ist, der über eine mit einem Speicherventil versehene Anschlussleitung mit der Hauptdruckleitung verbindbar sowie gegenüber dieser absperrbar ist.

Die Erfindung betrifft des Weiteren ein Verfahren zur Steuerung einer derartigen Luftfederungsanlage eines Kraftfahrzeugs beim Be- und Entlüften der Federbälge von Luftfedern.

Luftfederungsanlagen weisen gegenüber konventionellen Stahlfederungen wesentliche Vorteile auf und kommen daher zunehmend sowohl bei Nutzfahrzeugen, wie Lastkraftfahrzeugen und Omnibussen, als auch bei vorzugsweise schweren Personenfahrzeugen, wie Oberklasselimousinen und SUV's, zur Anwendung. So ermöglicht eine Luftfederungsanlage eine beladungsunabhängige Niveauregelung, da der aktuelle Beladungszustand jeweils durch eine Anpassung des Balgdruckes in den Federbälgen der Luftfedern ausgeglichen werden kann. Ebenso bietet eine Luftfederungsanlage aufgrund der progressiven Federkennlinien der Luftfedern einen besonders sicheren Fahrbahnkontakt der Räder und ein komfortables Ansprechverhalten beim Aus- und Einfedern der Räder. Ein weiterer Vorteil von Luftfederungsanlagen besteht darin, dass die Bodenfreiheit der betreffenden Fahrzeuge bedarfsweise verändert, z.B. für einen Offroad-Einsatz erhöht und für eine Schnellfahrt auf der Autobahn verringert werden kann.

Bei Nutzfahrzeugen kommt hinzu, dass der Fahrzeugaufbau zum Be- und Entladen abgesenkt oder auf eine geeignete Höhe eingestellt werden kann. So kann z.B. der Fahrzeugrahmen eines luftgefederten Lastkraftfahrzeugs oder Anhängers zum Absetzen einer Wechselpritsche abgesenkt und zu deren Aufnahme wieder angehoben werden. Ebenso kann der Ladeboden eines Lastkraftfahrzeugs zur Erleichterung des Be- und Entladens durch Absenken oder Erhöhen des Balgdruckes an der Hinterachse auf das Niveau einer Laderampe eingestellt werden. Bei luftgefederten Omnibussen kann der fahrbahnäußere Fahrzeugaufbau zur Erleichterung des Ein- und Aussteigens der Fahrgäste durch Ablassen der Druckluft aus den fahrbahnäußeren Federbälgen abgesenkt und anschließend durch eine Befüllung der Federbälge wieder angehoben werden.

Der prinzipielle Aufbau einer derartigen Luftfederungsanlage ist beispielsweise aus der DE 198 35 491 C2 und der DE 100 04 880 A1 bekannt.

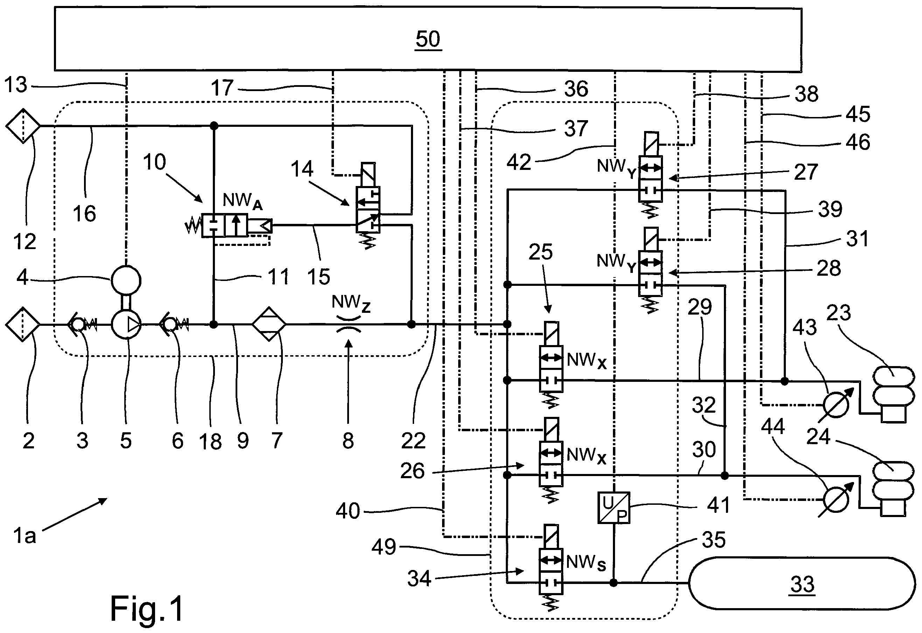

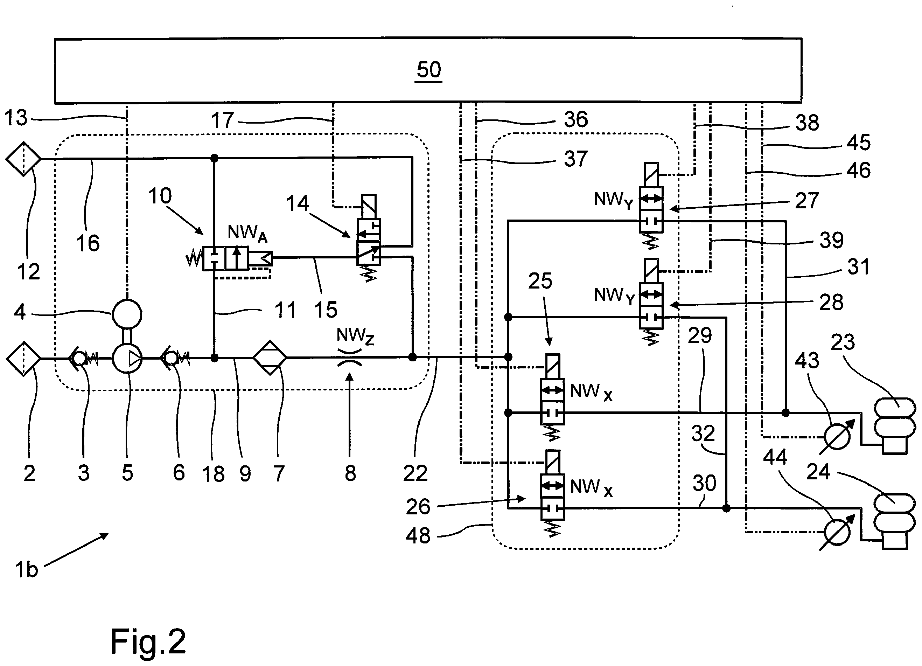

Die Luftfederungsanlage gemäß der DE 198 35 491 C2 weist mehrere Federbälge auf, die über jeweils mit einem Niveauregelventil versehene Anschlussleitungen mit einer Hauptdruckleitung verbindbar und gegenüber dieser absperrbar sind. Die Niveauregelventile sind jeweils als 2/2-Wege-Magnetschaltventile ausgebildet, die in einer ersten Schaltstellung (Ruhestellung) geschlossen und in einer zweiten Schaltstellung (Betätigungsstellung) geöffnet sind. Die Hauptdruckleitung ist über eine mit einem Kompressor, einem Lufttrockner und einem Rückschaltventil versehene Versorgungsleitung belüftbar sowie über eine zwischen dem Kompressor und dem Lufttrockner abzweigende und mit einem Ablassventil versehene Entlüftungsleitung entlüftbar. Das Ablassventil ist als ein druckgesteuertes 2/2-Wege-Schaltventil ausgebildet, das in einer ersten Schaltstellung (Ruhestellung) geschlossen und in einer zweiten Schaltstellung (Betätigungsstellung) geöffnet ist. Das dem Ablassventil zugeordnete Vorsteuerventil ist als ein 3/2-Wege-Magnetschaltventil ausgebildet, das die zum Ablassventil führende Steuerleitung in einer ersten Schaltstellung (Ruhestellung) mit der Umgebung und in einer zweiten Schaltstellung (Betätigungsstellung) mit der Hauptdruckleitung verbindet. In einer ersten Ausführungsform dieser bekannten Luftfederungsanlage nach der dortigen Fig. 1 ist in einem zu dem Rückschlagventil parallelen Leitungsabschnitt ein als ein druckgesteuertes 2/2-Wege-Schaltventil ausgebildetes Drosselventil angeordnet, das in einer ersten Schaltstellung (Ruhestellung) geschlossen und in einer zweiten Schaltstellung (Betätigungsstellung) mit einer Drosselquerschnittsfläche geöffnet ist, und dessen pneumatischer Steuereingang an die Steuerleitung des Ablassventils angeschlossen ist. Das Drosselventil wird somit beim Belüften der Hauptdruckleitung wie auch das Ablassventil durch das Vorsteuerventil geöffnet, wobei die genannte Drosselquerschnittsfläche den Luftmassenstrom begrenzt und vor dem Lufttrockner entspannt, wodurch die Feuchtigkeitsaufnahme der Druckluft aus dem Lufttrockner erhöht und damit dessen Regeneration verbessert wird. In einer zweiten Ausführungsform dieser bekannten Luftfederungsanlage nach der dortigen Fig. 2 sind das Ablassventil und das Drosselventil in einem gemeinsamen druckgesteuerten 4/2-Wege-Schaltventil zusammengefasst.

Die Luftfederungsanlage gemäß der DE 100 04 880 A1 unterscheidet sich von dem gerade beschriebenen Stand der Technik dadurch, dass ein Rückschlagventil zwischen dem Kompressor und dem Lufttrockner angeordnet ist, und dass anstelle des Rückschlagventils sowie des parallel geschalteten Drosselventils nun dem Trockner in der Versorgungsleitung eine Drossel in Belüftungsrichtung nachgeschaltet ist. Zudem weist das Ablassventil nun eine Druckbegrenzungsfunktion sowie ein in der zweiten Schaltstellung (Betätigungsstellung) aktiviertes Rückschlagventil auf. Auch weist die Luftfederungsanlage gemäß der DE 100 04 880 A1 einen Druckspeicher auf, der über eine mit einem Speicherventil versehene Anschlussleitung mit der Hauptdruckleitung verbindbar und gegenüber dieser absperrbar ist. In einer ersten Ausführungsform dieser bekannten Luftfederungsanlage nach der dortigen Fig. 1 ist zusätzlich ein Hochdruck-Ablassventil vorgesehen, das als ein 2/2-Wege-Magnetschaltventil ausgebildet ist, und durch das bedarfsweise Druckluft aus der Hauptdruckleitung unter Umgehung des Lufttrockners in die Umgebung abgelassen werden kann. In einer zweiten Ausführungsform dieser bekannten Luftfederungsanlage nach der dortigen Fig. 2 ist dem Ablassventil in Entlüftungsrichtung ein Drosselventil mit einer steuerbaren Drosselquerschnittsfläche nachgeschaltet, durch das beim Entlüften von Federbälgen der in die Umgebung abströmende Luftmassenstrom begrenzbar und damit die Absenkgeschwindigkeit des Fahrzeugaufbaus z.B. an einer Fahrzeugachse oder an einer Fahrzeugseite steuerbar ist.

In der DE 42 43 577 B4 ist dagegen eine Luftfederungsanlage eines Kraftfahrzeugs beschrieben, bei der einem als 3/2-Wege-Magnetschaltventil ausgebildeten ersten Steuerventil, über das mehrere jeweils mit einem Niveauregelventil versehene und zu dem Federbalg einer zugeordneten Luftfeder führende Anschlussleitungen mit einer Druckquelle, wie z.B. einem Druckspeicher, oder einer Drucksenke, wie z.B. der Umgebung, verbindbar sind, ein als 2/2-Wege-Magnetschaltventil ausgebildetes zweites Steuerventil in Belüftungsrichtung nachgeschaltet ist. Dieses zweite Steuerventil ist in einer ersten Schaltstellung (Ruhestellung) ungedrosselt geöffnet und in einer zweiten Schaltstellung (Betätigungsstellung) mit einer Drosselquerschnittsfläche geöffnet. Durch die Betätigung des zweiten Steuerventils ist diese bekannte Luftfederungsanlage somit zwischen einer schnellen Be- und Entlüftung der Federbälge und einer langsamen Be- und Entlüftung der Federbälge umschaltbar. Allerdings kann die Drossel des zweiten Steuerventils nur für eine bestimmte Anzahl von Federbälgen, also für die langsame Be- und Entlüftung von z.B. zwei oder vier Federbälgen, ausgelegt sein und ist daher nur eingeschränkt nutzbar.

Schließlich ist aus der DE 102 23 405 B4 eine Luftfederungsanlage eines Kraftfahrzeugs bekannt, die weitgehend derjenigen aus der DE 198 35 491 C2 entspricht, bei der jedoch wie bei der Luftfederungsanlage nach der DE 100 04 880 A1 ein Druckspeicher vorgesehen ist, der über eine mit einem Speicherventil versehene Anschlussleitung mit der Hauptdruckleitung verbindbar und gegenüber dieser absperrbar ist. Eine erste Ausführungsform dieser bekannten Luftfederungsanlage nach der dortigen Fig. 1 unterscheidet sich demgegenüber dadurch, dass das Ablassventil nun als ein 2/2-Wege-Magnetschaltventil ausgebildet ist, und dass in dem zu der Drossel parallelen Leitungsabschnitt anstelle eines in einer Schaltstellung mit einer konstanten Drosselquerschnittsfläche versehenen Schaltventils nun ein Drosselventil mit einer steuerbaren Drosselquerschnittsfläche angeordnet ist. Durch die in begrenztem Umfang mögliche Verstellung der Drosselquerschnittsfläche kann der beim Be- und Entlüften von Federbälgen über den Lufttrockner ein- oder ausströmende Luftmassenstrom reguliert und damit die Anhebe- und Absenkgeschwindigkeit des Fahrzeugaufbaus z.B. an der betreffenden Fahrzeugachse oder der Fahrzeugseite bereichsweise gesteuert werden. Ein Drosselventil mit steuerbarer Drosselquerschnittsfläche stellt allerdings ein kompliziertes und aufwendig herstellbares Bauteil dar, das entsprechend teuer sowie störungsanfällig ist.

Die US20080111337A1 offenbart eine Luftfederungsanlage eines Kraftfahrzeugs mit einem jeder Luftfeder zugeordneten Federbalg, der über eine mit einem Niveauregelventil versehene Anschlussleitung mit einer Hauptdruckleitung verbindbar und gegenüber dieser absperrbar ist, wobei die Hauptdruckleitung über eine mit einem Kompressor und einem Lufttrockner versehene Versorgungsleitung belüftbar und über eine zwischen dem Kompressor und dem Lufttrockner abzweigende und mit einem Ablassventil versehene Entlüftungsleitung entlüftbar ist. Ferner weist die Luftfederungsanlage je einen Zusatzspeicher je Federbalg der Luftfeder auf, welcher über eine Zusatzleitung mit einem schaltbaren Zusatzventil mit dem jeweiligen Federbalg verbindbar ist. Jeder Zusatzspeicher ist über eine Speicherleitung mit einem schaltbaren Speicherventil mit der Hauptdruckleitung verbindbar. Es offenbart eine Luftfederungsanlage gemäß dem Oberbegriff des Anspruchs 1, ein Verfahren zur Steuerung einer Luftfederungsanlage gemäß dem Oberbegriff des Anspruchs 6 und ein Verfahren zur Steuerung einer Luftfederungsanlage gemäß dem Oberbegriff des Anspruchs 8. Grundsätzlich besteht bei den bekannten Luftfederungsanlagen somit das Problem, dass der Luftmassenstrom beim Belüften sowie Entlüften der Federbälge und damit die Anhebe- und Absenkgeschwindigkeit des Fahrzeugaufbaus nur unzureichend gesteuert bzw. variiert werden kann. Während bei der Niveauregelungsfunktion und zum Ausgleich von Leckageverlusten nur relativ geringe Luftmassenströme erforderlich sind, müssen zum schnellen Absenken und Anheben des Fahrzeugaufbaus relativ große Luftmassenströme in die betreffenden Federbälge geleitet oder aus diesen abgeführt werden. Dies ist bei den bislang bekannten Luftfederungsanlagen entweder nur unzureichend und in Verbindung mit Funktionsnachteilen bzw. Funktionseinschränkungen oder nur mit hohem apparativem Aufwand möglich.

Der vorliegenden Erfindung liegt daher die Aufgabe zugrunde, eine Luftfederungsanlage eines Kraftfahrzeugs der eingangs genannten Art vorzuschlagen, bei welcher die Möglichkeit, unterschiedliche Strömungsgeschwindigkeiten des Luftmassenstroms beim Be- und Entlüften der Federbälge von Luftfedern einzustellen, auf einfache und kostengünstige Weise realisiert ist. Außerdem soll ein Verfahren zur Steuerung einer derartigen Luftfederungsanlage beim Be- und Entlüften der Federbälge von Luftfedern angegeben werden.

Die gegenständliche Aufgabe an die Erfindung wird durch die Merkmale der unabhängigen Ansprüche 1, 6 und 8 gelöst. Vorteilhafte Ausgestaltungen und Weiterbildungen der erfindungsgemäßen Luftfederungsanlage sind Gegenstand der Unteransprüche. Verfahrensangaben zur Steuerung der erfindungsgemäßen Luftfederungsanlage beim Be- und Entlüften der Federbälge von Luftfedern sind in den vorrichtungstechnischen Ansprüchen aufgeführt.

Die Erfindung geht demnach aus von einer an sich bekannten Luftfederungsanlage eines Kraftfahrzeugs, mit zumindest einem einer Luftfeder mindestens einer Fahrzeugachse zugeordneten Federbalg, der über eine mit einem Niveauregelventil versehene Anschlussleitung mit einer Hauptdruckleitung verbindbar und gegenüber dieser absperrbar ist, wobei die Hauptdruckleitung über eine mit einem Kompressor und einem Lufttrockner versehene Versorgungsleitung belüftbar sowie über eine zwischen dem Kompressor und dem Lufttrockner abzweigende sowie mit einem Ablassventil versehene Entlüftungsleitung entlüftbar ist, und wobei optional ein Druckspeicher vorgesehen ist, der über eine mit einem Speicherventil versehene Anschlussleitung mit der Hauptdruckleitung verbindbar sowie gegenüber dieser absperrbar ist.

Um nun bei einer derartigen Luftfederungsanlage auf einfache und kostengünstige Weise die Möglichkeit zu schaffen, beim Be- und Entlüften der Federbälge von Luftfedern unterschiedliche Luftmassenströme und damit unterschiedliche Anhebe- und Absenkgeschwindigkeiten des Fahrzeugaufbaus an der betreffenden Fahrzeugachse oder Fahrzeugseite einzustellen, soll der zumindest eine Federbalg der mindestens an einer Fahrzeugachse oder an einer Fahrzeugseite angeordneten Luftfeder, idealerweise natürlich die Federbälge aller vorhandenen Luftfedern, nicht mehr wie bislang üblich jeweils über eine einzige mit einem Niveauregelventil versehene Anschlussleitung mit der Hauptdruckleitung verbindbar oder gegenüber dieser absperrbar sein. Dagegen ist hierzu erfindungsgemäß vorgesehen, dass der zumindest eine Federbalg der mindestens an einer Fahrzeugachse oder an einer Fahrzeugseite angeordneten Luftfeder, idealerweise also die Federbälge aller vorhandenen Luftfedern, über mindestens zwei parallele, jeweils mit einem Niveauregelventil versehene Anschlussleitungen mit der Hauptdruckleitung verbindbar und gegenüber dieser absperrbar ist.

Der zu einem Federbalg einer Luftfeder strömende oder von diesem abströmende Luftmassenstrom ist somit auf einfache Weise durch die Öffnung nur eines der beiden Niveauregelventile oder beider Niveauregelventile in mindestens zwei Stufen steuerbar. Bei den Niveauregelventilen handelt es sich üblicherweise um 2/2-Wege-Magnetschaltventile, die heute in hoher Stückzahl hergestellt werden und entsprechend kostengünstig beziehbar sind. Ebenso stellen Druckluftleitungen keinen nennenswerten Kostenfaktor dar. Der einzig mögliche Nachteil der erfindungsgemäßen Luftfederungsanlage besteht somit in dem Platzbedarf für die zusätzlichen Anschlussleitungen und die zusätzlichen Niveauregelventile.

Die erfindungsgemäße Ausstattung der Federbälge von Luftfedern eines Kraftfahrzeugs mit parallel angeordneten Anschlussleitungen und Niveauregelventilen muss nicht zwangsläufig an allen Luftfedern ausgeführt sein. Vielmehr ist es zweckmäßig nur die Federbälge derjenigen Luftfedern damit auszurüsten, bei denen unterschiedliche Anhebe- und Absenkgeschwindigkeiten des Fahrzeugaufbaus tatsächlich benötigt werden, beispielsweise bei einem Lastkraftfahrzeug mit festem Aufbau nur an den Luftfedern der Hinterachse zur Justierung der Ladebodenkante beim Be- und Entladen sowie bei einem Omnibus nur an den fahrbahnäußeren Luftfedern zum schnellen Absenken und Anheben der Einstiege an den Haltestellen.

Die jeweils mindestens zwei Niveauregelventile der betreffenden Federbälge können gleich große Düsenquerschnittsflächen aufweisen. In diesem Fall sind die Niveauregelventile somit völlig baugleich ausgeführt. Dies bedeutet, dass die Nennweiten NW_{X}, NW_{Y} der jeweiligen Düsenquerschnittsflächen der betreffenden Niveauregelventile identisch sind (NW_{X} = NW_{Y}). Durch die Verwendung völlig baugleicher Niveauregelventile ergeben sich Kostenvorteile bei deren Beschaffung und Logistik. Ebenso wird dadurch die Verwechslung von Niveauregelventilen bei der Montage und bei späteren Reparaturen der Luftfederungsanlage vermieden. Durch die Öffnung eines der beiden Niveauregelventile und beider Niveauregelventile können somit effektiv zwei Düsenquerschnittsflächen pro Federbalg freigeschaltet werden.

Alternativ dazu können die jeweils mindestens zwei Niveauregelventile der betreffenden Federbälge jedoch auch unterschiedlich große Düsenquerschnittsflächen aufweisen. Dies bedeutet, dass die Nennweite NW_{X} des einen Niveauregelventils größer ist als die Nennweite NW_{Y} des anderen, demselben Federbalg zugeordneten Niveauregelventils (NW_{X} > NWy). Dem Nachteil geringfügig höherer Kosten für Beschaffung und Logistik steht der Vorteil gegenüber, dass in diesem Fall durch die Öffnung jeweils eines der beiden Niveauregelventile und beider Niveauregelventile insgesamt drei Düsenquerschnittsflächen pro Federbalg freigeschaltet werden können.

Zur Reduzierung des Montageaufwands ist zweckmäßig vorgesehen, dass zumindest die zwei dem Federbalg einer einzigen Luftfeder zugeordneten Niveauregelventile in einem gemeinsamen Ventilblock angeordnet sind. In diesem Fall würde somit ein zweifacher Ventilblock zur Anwendung kommen. Selbstverständlich können aber auch die den Federbälgen mehrerer Luftfedern zugeordneten Niveauregelventile in einem gemeinsamen Ventilblock zusammengefasst sein. So ist es vorteilhaft, wenn z.B. die vier Niveauregelventile, die den zwei Federbälgen der beiden Luftfedern einer Fahrzeugachse zugeordnet sind, in einem gemeinsamen vierfachen Ventilblock oder unter Einbeziehung des Speicherventils eines in der Nähe der Fahrzeugachse angeordneten Druckspeichers in einem gemeinsamen fünffachen Ventilblock angeordnet sind.

Um die Entfeuchtung der Druckluft im Lufttrockner beim Belüften der Hauptdruckleitung und die Regeneration des Lufttrockners beim Entlüften der Hauptdruckleitung zu verbessern, kann dem Lufttrockner in Belüftungsrichtung eine Drossel nachgeschaltet sein. Damit diese Drossel aber die Steuerung des jeweiligen Luftmassenstroms über die Niveauregelventile nicht beeinträchtigt, ist die Querschnittsfläche dieser Drossel größer als die Summe der Düsenquerschnittsflächen aller Niveauregelventile. Diese Bedingung ist dann erfüllt, wenn die Gleichung NW_{Z} > (n_{FB} * (NW_{X}² + NW_{Y}²))^{0,5} eingehalten wird, wobei mit NW_{X} die Nennweite der ersten Niveauregelventile, mit NW_{Y} die Nennweite der zweiten Niveauregelventile, mit NW_{Z} die Nennweite der Drossel und mit n_{FB} die Anzahl der Federbälge bezeichnet ist. Wenn die ersten Niveauregelventile beispielsweise eine Nennweite von NW_{X} = 2,0 mm aufweisen, die zweiten Niveauregelventile eine Nennweite von NW_{Y} = 1,7 mm aufweisen, und zwei Federbälge von an einer Fahrzeugachse angeordneten Luftfedern vorhanden sind (n_{FB} = 2), sollte die Nennweite der Drossel NW_{Z} somit größer als 3,7 mm sein (NW_{Z} > 3,7 mm), um eine unerwünschte Drosselung des Luftmassenstroms an der Drossel zu vermeiden.

Zur Steuerung einer Luftfederungsanlage eines Kraftfahrzeugs beim Be- und Entlüften zumindest eines Federbalgs, der zumindest den an einer Fahrzeugachse oder zumindest an einer Fahrzeugseite angeordneten Luftfeder zugeordnet ist und jeweils über zwei parallele, jeweils mit einem Niveauregelventil versehene Anschlussleitungen mit einer Hauptdruckleitung verbindbar sowie gegenüber dieser absperrbar ist, ist dann, wenn die jeweils zwei Niveauregelventile des betreffenden Federbalgs gleich große Düsenquerschnittsflächen aufweisen (NW_{X} = NW_{Y}), vorgesehen, dass für ein langsames Absenken oder Anheben des Fahrzeugaufbaus an mindestens einer der Fahrzeugachsen oder an mindestens einer Fahrzeugseite jeweils eines der beiden Niveauregelventile der betreffenden Federbälge geöffnet wird, und dass bei einem schnellen Absenken oder Anheben des Fahrzeugaufbaus an mindestens einer der Fahrzeugachsen oder an mindestens einer Fahrzeugseite jeweils beide Niveauregelventile der betreffenden Federbälge geöffnet werden.

Zur Steuerung einer Luftfederungsanlage eines Kraftfahrzeugs beim Be- und Entlüften zumindest eines Federbalgs, der zumindest einer an einer Fahrzeugachse oder zumindest an einer Fahrzeugseite angeordneten Luftfeder zugeordnet ist und jeweils über zwei parallele, jeweils mit einem Niveauregelventil versehene Anschlussleitungen mit einer Hauptdruckleitung verbindbar und gegenüber dieser absperrbar ist, ist dann, wenn die jeweils zwei Niveauregelventile der betreffenden Federbälge unterschiedlich große Düsenquerschnittsflächen aufweisen (NW_{X} > NW_{Y}), vorgesehen, dass bei einem langsamen Absenken oder Anheben des Fahrzeugaufbaus an mindestens einer der Fahrzeugachsen oder an mindestens einer Fahrzeugseite jeweils dasjenige Niveauregelventil der betreffenden Federbälge mit der kleineren Düsenquerschnittsfläche (NW_{Y}) geöffnet wird, dass bei einem Absenken oder Anheben des Fahrzeugaufbaus an mindestens einer der Fahrzeugachsen oder an mindestens einer Fahrzeugseite mit mittlerer Stellgeschwindigkeit jeweils dasjenige Niveauregelventil des betreffenden Federbalgs mit der größeren Düsenquerschnittsfläche (NW_{X}) geöffnet wird, und dass bei einem schnellen Absenken oder Anheben des Fahrzeugaufbaus an mindestens einer der Fahrzeugachsen oder an mindestens einer Fahrzeugseite jeweils beide Niveauregelventile des betreffenden Federbalgs geöffnet werden.

Zur weiteren Verdeutlichung der Erfindung ist der Beschreibung eine Zeichnung mit Ausführungsbeispielen beigefügt. In dieser zeigt
Fig. 1 den schematischen Aufbau einer ersten Ausführungsform der erfindungsgemäßen Luftfederungsanlage eines Kraftfahrzeugs,
Fig. 2 den schematischen Aufbau einer zweiten Ausführungsform der erfindungsgemäßen Luftfederungsanlage eines Kraftfahrzeugs,
Fig. 3 den schematischen Aufbau einer bekannten ersten Luftfederungsanlage eines Kraftfahrzeugs, und
Fig. 4 den schematischen Aufbau einer bekannten zweiten Luftfederungsanlage eines Kraftfahrzeugs.

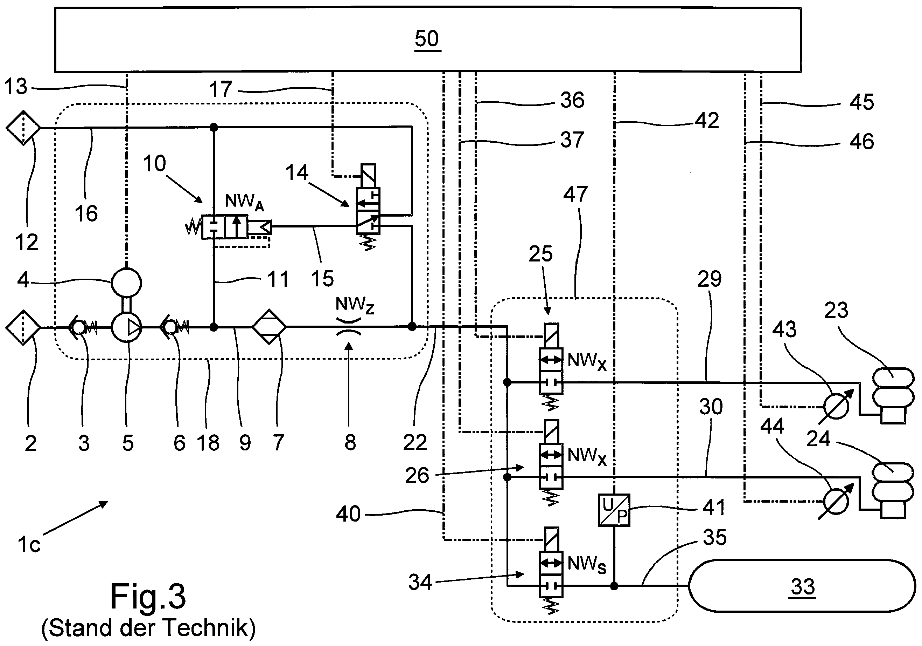

Eine in Fig. 3 in schematischer Form dargestellte bekannte Luftfederungsanlage 1c eines Kraftfahrzeugs weist beispielhaft zwei den beiden Luftfedern einer Fahrzeugachse zugeordnete Federbälge 23, 24 auf, die über jeweils mit einem Niveauregelventil 25, 26 versehene Anschlussleitungen 29, 30 mit einer Hauptdruckleitung 22 verbindbar und gegenüber dieser absperrbar sind. Die Niveauregelventile 25, 26 sind als 2/2-Wege-Magnetschaltventile ausgebildet, die in einer ersten Schaltstellung (Ruhestellung) geschlossen und in einer zweiten Schaltstellung (Betätigungsstellung) jeweils mit einer Düsenquerschnittsfläche der Nennweite NW_{X} geöffnet sind. Zudem ist ein Druckspeicher 33 vorhanden, der über eine mit einem Speicherventil 34 versehene Anschlussleitung 35 mit der Hauptdruckleitung 22 verbindbar und gegenüber dieser absperrbar ist. Das Speicherventil 34 ist als ein 2/2-Wege-Magnetschaltventil ausgebildet, das in einer ersten Schaltstellung (Ruhestellung) geschlossen und in einer zweiten Schaltstellung (Betätigungsstellung) mit einer Düsenquerschnittsfläche der Nennweite NW_{S} geöffnet ist.

Die Elektromagneten der beiden Niveauregelventile 25, 26 und des Speicherventils 34 stehen über zugeordnete elektrische Steuerleitungen 36, 37, 40 mit einem elektronischen Steuergerät 50 in Verbindung. Zwischen dem Druckspeicher 33 und dem Speicherventil 34 ist ein Drucksensor 41 zur Erfassung des in dem Druckspeicher 33 herrschenden Speicherdruckes an die pneumatische Anschlussleitung 35 angeschlossen, der über eine Sensorleitung 42 mit dem Steuergerät 50 verbunden ist. Nahe der die Federbälge 23, 24 aufweisenden Luftfedern ist jeweils ein Wegsensor 43, 44 zur Erfassung des Aufbauniveaus im Bereich der betreffenden Fahrzeugachse angeordnet, die über jeweils eine Sensorleitung 45, 46 mit dem Steuergerät 50 in Verbindung stehen. Die beiden Niveauregelventile 25, 26, das Speicherventil 34 und der Drucksensor 41 sind vorliegend beispielhaft in einem dreifachen Ventilblock 47 angeordnet.

Die Hauptdruckleitung 22 ist über eine mit einem eingangsseitig angeordneten ersten Filter 2, einem ersten Rückschlagventil 3, einem von einem Elektromotor 4 antreibbaren Kompressor 5, einem zweiten Rückschlagventil 6, einem Lufttrockner 7, und einer diesem in Belüftungsrichtung nachgeschalteten Drossel 8 mit einer Drosselquerschnittsfläche der Nennweite NW_{Z} versehene Versorgungsleitung 9 belüftbar. Weiter ist die Hauptdruckleitung 22 über eine zwischen dem zweiten Rückschlagventil 6 und dem Lufttrockner 7 abzweigende und mit einem Ablassventil 10 versehene Entlüftungsleitung 11 mit einem endseitig angeordneten, auch als Schalldämpfer wirksamen zweiten Filter 12 entlüftbar.

Der Elektromotor 4 des Kompressors 5 steht in nicht dargestellter Weise mit einer Stromversorgung und über eine elektrische Steuerleitung 13 mit dem Steuergerät 50 in Verbindung. Das Ablassventil 10 ist als ein druckgesteuertes 2/2-Wege-Schaltventil mit einer Düsenquerschnittsfläche der Nennweite NW_{A} ausgebildet, das in einer ersten Schaltstellung (Ruhestellung) geschlossen und in einer zweiten Schaltstellung (Betätigungsstellung) geöffnet ist, und das eine Druckbegrenzungsfunktion für den in der Versorgungsleitung 9 herrschenden Druck aufweist. Anstelle des pneumatisch gesteuerten Ablassventils 10 kann auch ein elektromagnetisch arbeitendes Ablassventil genutzt werden.

Das dem Ablassventil 10 zugeordnete Vorsteuerventil 14 ist als ein 3/2-Wege-Magnetschaltventil ausgebildet, das die zu dem Ablassventil 10 führende pneumatische Steuerleitung 15 in einer ersten Schaltstellung (Ruhestellung) mit dem permanent drucklosen Abschnitt 16 der Entlüftungsleitung 11 und in einer zweiten Schaltstellung (Betätigungsstellung) mit der Hauptdruckleitung 22 verbindet. Der Elektromagnet des Vorsteuerventils 14 steht über eine elektrische Steuerleitung 17 mit dem Steuergerät 50 in Verbindung. Die beiden Rückschlagventile 3 und 6, der Kompressor 5 mit dem zugeordneten Elektromotor 4, der Lufttrockner 7, die Drossel 8 und das Ablassventil 10 mit dem zugeordneten Vorsteuerventil 14 sind vorliegend beispielhaft in einem Kompressormodul 18 zusammengefasst.

Die Belüftung der Federbälge 23, 24 kann über den Kompressor 5, aus dem Druckspeicher 33 oder gleichzeitig aus beiden Druckquellen erfolgen. Bei einer Belüftung der Federbälge 23, 24 über den Kompressor 5 wird dieser von dem Elektromotor 4 angetrieben und fördert durch die Versorgungsleitung 9 Druckluft aus der Umgebung über den Filter 2, die beiden Rückschlagventile 3 und 6, den Lufttrockner 7 sowie die Drossel 8 in die Hauptdruckleitung 22. Beim Durchströmen des Lufttrockners 7, der vorzugsweise ein regenerierbares Silikat-Granulat enthält, wird die Druckluft entfeuchtet, was durch den Druckanstieg vor der Drossel 8 verstärkt wird. Aus der Hauptdruckleitung 22 strömt die Druckluft über die Anschlussleitungen 29, 30 und die geöffneten Niveauregelventile 25, 26 in die Federbälge 23, 24.

Bei einer Belüftung der Federbälge 23, 24 aus dem Druckspeicher 33 strömt die dort unter hohem Druck gespeicherte Druckluft über die Anschlussleitung 35 und das geöffnete Speicherventil 34 in die Hauptdruckleitung 22 und von dort über die Anschlussleitungen 29, 30 und die geöffneten Niveauregelventile 25, 26 in die Federbälge 23, 24.

Bei einer Entlüftung der Federbälge 23, 24 strömt die Druckluft aus den Federbälgen 23, 24 über die Anschlussleitungen 29, 30 sowie die geöffneten Niveauregelventile 25, 26 in die Hauptdruckleitung 22 und von dort über die Drossel 8, den Lufttrockner 7, die Entlüftungsleitung 11, das geöffnete Ablassventil 10 und den auch als Schalldämpfer wirksamen Filter 12 in die Umgebung ab. Beim Durchströmen des Lufttrockners 7 durch die zuvor getrocknete Druckluft nimmt diese Feuchtigkeit aus dem Silikat-Granulat auf, wodurch der Lufttrockner 7 regeneriert wird. Die Regeneration des Lufttrockners 7 wird durch den Druckabfall der Druckluft über die Drossel 8 verstärkt.

Die Öffnung des Ablassventils 10 erfolgt dadurch, dass die zugeordnete pneumatische Steuerleitung 15, die im unbetätigten Zustand des Vorsteuerventils 14 an den permanent drucklosen Abschnitt 16 der Entlüftungsleitung 11 angeschlossen ist, durch die Umschaltung des Vorsteuerventils 14 an die druckführende Hauptdruckleitung 22 angeschlossen wird. Das Ablassventil 10 bleibt daher solange geöffnet, bis der in der Hauptdruckleitung 22 herrschende Druck einen Mindestwert unterschreitet oder das Vorsteuerventil 14 in die Ruhestellung umgeschaltet wird.

Aus dem Aufbau und der Funktionsbeschreibung der bekannten Luftfederungsanlage 1c gemäß Fig. 3 ist ersichtlich, dass der Luftmassenstrom beim Be- und Entlüften der Federbälge 23, 24 und damit die Stellgeschwindigkeit beim Anheben und Absenken des Fahrzeugaufbaus an der betreffenden Fahrzeugachse nur unzureichend gesteuert, d.h. in seiner Höhe einstellbar ist. Während der Luftmassenstrom bei der Belüftung der Federbälge 23, 24 in begrenztem Umfang durch den in der Hauptdruckleitung 22 eingestellten Druck beeinflussbar ist, ergibt sich der Luftmassenstrom beim Entlüften der Federbälge 23, 24 selbsttätig im wesentlichen aus dem in den Federbälgen 23, 24 herrschenden Druck und den Strömungswiderständen der Niveauregelventile 25, 26, der Drossel 8, des Lufttrockners 7, des Ablassventils 10 und des Filters 12.

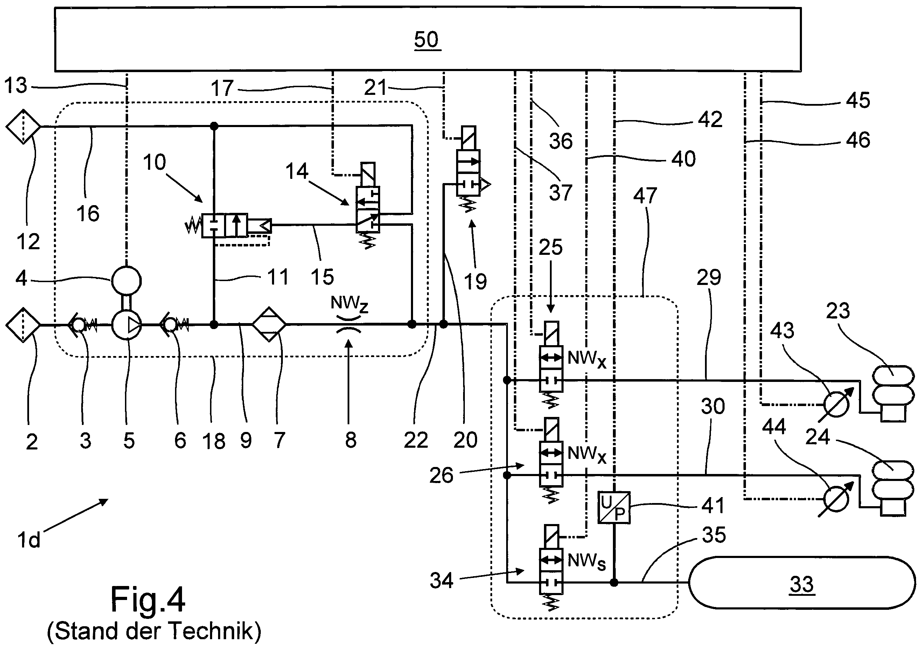

Zur teilweisen Behebung dieses Nachteils ist in der bekannten Luftfederungsanlage 1d, die in schematischer Form in Fig. 4 dargestellt ist und weitgehend der Luftfederungsanlage 1c nach Fig. 3 entspricht, zusätzlich ein Schnellablassventil 19 vorgesehen. Das Schnellablassventil 19 ist als ein 2/2-Wege-Magnetschaltventil ausgebildet, durch das eine an die Hauptdruckleitung 22 angeschlossene Schnellentlüftungsleitung 20 in einer ersten Schaltstellung (Ruhestellung) abgesperrt und in einer zweiten Schaltstellung (Betätigungsstellung) mit der Umgebung verbunden ist. Der Elektromagnet des Schnellablassventils 19 steht über eine elektrische Steuerleitung 21 mit dem Steuergerät 50 in Verbindung. Durch die Öffnung des Schnellablassventils 19 ist es somit möglich, Druckluft aus der Hauptdruckleitung 22 und bei geöffneten Niveauregelventilen 25, 26 auch aus den Federbälgen 23, 24 unter Umgehung der Drossel 8, des Lufttrockners 7, des Ablassventils 10 und des Filters 12 in die Umgebung abströmen zu lassen, um damit ein schnelles Absenken des Fahrzeugaufbaus an der betreffenden Fahrzeugachse zu bewirken. Nachteilig daran ist jedoch, dass die zuvor beim Belüften der Federbälge 23, 24 getrocknete Druckluft dabei ungenutzt entweicht, und der Lufttrockner 7 bzw. das in diesem befindliche Silikat-Granulat dadurch nicht regeneriert wird.

Demgegenüber weist eine erste Ausführungsform einer erfindungsgemäßen Luftfederungsanlage 1a, die in schematischer Form in Fig. 1 dargestellt ist und auf der Luftfederungsanlage 1c nach Fig. 3 basiert, eine einfach und kostengünstig realisierbare Lösung zur Verbesserung der Steuerbarkeit des Luftmassenstroms beim Be- und Entlüften der Luftfederbälge 23, 24 auf. Hierzu ist parallel zu den jeweils mit einem ersten Niveauregelventil 25, 26 versehenen ersten Anschlussleitungen 29, 30 jeweils eine mit einem zweiten Niveauregelventil 27, 28 versehene zweite Anschlussleitung 31, 32 zwischen der Hauptdruckleitung 22 und dem jeweils zugeordneten Federbalg 23, 24 angeordnet.

Die zweiten Niveauregelventile 27, 28 sind weitgehend baugleich wie die ersten Niveauregelventile 25, 26 als 2/2-Wege-Magnetschaltventile ausgebildet, die in einer ersten Schaltstellung (Ruhestellung) geschlossen und in einer zweiten Schaltstellung (Betätigungsstellung) jeweils mit einer Düsenquerschnittsfläche der Nennweite NW_{Y} geöffnet sind, und deren Elektromagneten über jeweils eine zugeordnete elektrische Steuerleitung 38, 39 mit dem Steuergerät 50 in Verbindung stehen.

Durch eine singuläre oder kombinierte Öffnung der jeweils einem Federbalg 23, 24 zugeordneten Niveauregelventile 25, 27 bzw. 26, 28 können somit mehrere Düsenquerschnittsflächen freigeschaltet und somit beim Be- und Entlüften der Federbälge 23, 24 unterschiedliche Luftmassenströme eingestellt werden.

Wenn die ersten und zweiten Niveauregelventile 25, 27 bzw. 26, 28 völlig baugleich ausgeführt sind und identische Düsenquerschnittsflächen bzw. Nennweiten NW_{X}, NW_{Y} aufweisen (NW_{X} = NW_{Y}), können in einer ersten Betriebsweise durch das Öffnen jeweils nur eines der beiden Niveauregelventile (25 oder 27; 26 oder 28) sowie in einer zweiten Betriebsweise durch das Öffnen jeweils beider Niveauregelventile (25 und 27; 26 und 28) effektiv zwei unterschiedlich große Düsenquerschnittsflächen freigeschaltet und demzufolge zwei verschiedene Anhebe- und Absenkgeschwindigkeiten des Fahrzeugaufbaus an der betreffenden Fahrzeugachse oder Fahrzeugseite eingestellt werden.

Wenn die ersten und zweiten Niveauregelventile 25, 27 bzw. 26, 28 dagegen unterschiedlich große Düsenquerschnittsflächen bzw. Nennweiten NW_{X}, NW_{Y} aufweisen, z.B. die Nennweite NW_{X} der ersten Niveauregelventile 25, 26 größer als die Nennweite NW_{Y} der zweiten Niveauregelventile 27, 28 ist (NW_{X} > NW_{Y}), dann können durch das Öffnen jeweils nur eines der beiden Niveauregelventile (25 oder 27; 26 oder 28) und durch das Öffnen jeweils beider Niveauregelventile (25 und 27; 26 und 28) sogar effektiv drei unterschiedlich große Düsenquerschnittsflächen freigeschaltet und demzufolge drei Anhebe- und Absenkgeschwindigkeiten des Fahrzeugaufbaus an der betreffenden Fahrzeugachse oder Fahrzeugseite eingestellt werden.

Bei der erfindungsgemäßen Luftfederungsanlage 1a gemäß Fig. 1 sind die Niveauregelventile 25, 26, 27, 28, das Speicherventil 34 sowie der Drucksensor 41 beispielhaft in einem fünffachen Ventilblock 49 zusammengefasst.

Sofern beispielhaft der eine Federbalg 23 an der fahrbahnäußeren Seite der Vorderachse und der andere Federbalg 24 an der fahrbahnäußeren Seite der Hinterachse eines Omnibusses angeordnet ist, so kann der fahrbahnäußere Fahrzeugaufbau zur Erleichterung des Ein- und Aussteigens der Fahrgäste durch Ablassen der Druckluft aus diesen fahrbahnäußeren Federbälgen abgesenkt und anschließend durch eine Befüllung der Federbälge wieder angehoben werden. Konkret kann ein schnelles Absenken des fahrbahnäußeren Fahrzeugaufbaus durch das Öffnen aller zugeordneten Niveauregelventile 25, 26, 27, 28 und Entlüften der Federbälge 23, 24 erreicht werden.

Ein anschließendes zunächst langsames Anheben des fahrbahnäußeren Fahrzeugaufbaus wird dann durch ein Belüften der Federbälge 23, 24 mittels derjenigen geöffneten zweiten Niveauregelventile 27, 28 erreicht, welche die kleineren Düsenquerschnittsfläche NWy aufweisen. Nach einem anfänglich langsamen Anheben des fahrbahnäußeren Fahrzeugaufbaus werden die zweiten Niveauregelventile 27, 28 mit der kleineren Düsenquerschnittsfläche NW_{Y} geschlossen und dafür die ersten Niveauregelventile 25, 26 mit der größeren Düsenquerschnittsfläche NW_{X} geöffnet, so dass sich beim weiteren Befüllen der Federbälge 23, 24 eine mittlere Anhebegeschwindigkeit einstellt. Abschließend wird eine maximale Anhebegeschwindigkeit dadurch eingestellt, dass zusätzlich zu den ersten Niveauregelventile 25, 26 auch die zweiten Niveauregelventile 27, 28 geöffnet werden, und die Belüftung der Federbälge 23, 24 über die Summe der Düsenquerschnittsflächen aller zugeordneten Niveauregelventile 25, 26, 27, 28 erfolgt.

Ein mit drei Geschwindigkeiten erfolgendes Absenken des fahrbahnäußeren Fahrzeugaufbaus kann beim Entlüften der Federbälge 23, 34 vorteilhaft in umgekehrter Reihenfolge der gerade beschriebenen Schaltbetätigung der Niveauregelventile 25, 26, 27, 28 durchgeführt werden.

Ebenso kann ein mit bis zu drei Geschwindigkeiten erfolgendes Anheben bzw. Absenken des Fahrzeugsaufbaus an einer Fahrzeugachse durchgeführt werden, etwa um die Ladefläche eines Lastkraftwagens an die Höhe einer Laderampe anzupassen. Dies setzt lediglich voraus, dass die Federbälge 23, 24 beidseitig an der gleichen Fahrzeugachse angeordnet sind.

Außerdem kann eine Luftfederungsanlage gemäß der Erfindung in nicht dargestellter Weise mit mehr als zwei Federbälgen versehen sein, wobei mehrere Federbälge über zwei zugeordnete Anschlussleitungen mit jeweils einem darin angeordneten Niveauregelventil belüftbar oder entlüftbar sind und an unterschiedlichen Fahrzeugachsen oder Seiten einer Fahrzeugachse angeordnet sind. Das Betreiben einer solchen Luftfederungsanlage erfolgt ebenfalls gemäß den genannten Verfahrensschritten.

Aufgrund der durch die erfindungsgemäße Ausbildung verbesserten Steuerbarkeit der Luftfederungsanlage 1a kann bedarfsweise auf den Druckspeicher 33, das zugeordnete Speicherventil 34, den Drucksensor 41 sowie die Sensorleitung 42 verzichtet werden. Eine entsprechend vereinfachte zweite Ausführungsform der erfindungsgemäßen Luftfederungsanlage 1b ist in schematischer Form in Fig. 2 dargestellt. Da die Mehrzahl der Bauteile dieser Luftfederungsanlage 1b bereits im Zusammenhang mit den Luftfederungsanlagen der Figuren 1, 3 und 4 erläutert wurden, wird darauf nachfolgend nicht mehr im Detail eingegangen. Aufgrund der bei der Luftfederungsanlage 1b gemäß Fig. 2 eingesparten Bauteile sind nun die Niveauregelventile 25, 26, 27, 28 beispielhaft in einem vierfachen Ventilblock 48 zusammengefasst.

### Bezugszeichenliste (Bestandteil der Beschreibung)

- 1a - 1d: Luftfederungsanlage
- 2: Erster Filter
- 3: Erstes Rückschlagventil
- 4: Elektromotor
- 5: Kompressor
- 6: Zweites Rückschlagventil
- 7: Lufttrockner
- 8: Drossel
- 9: Versorgungsleitung
- 10: Ablassventil
- 11: Entlüftungsleitung
- 12: Zweiter Filter
- 13: Elektrische Steuerleitung
- 14: Vorsteuerventil
- 15: Pneumatische Steuerleitung
- 16: Druckloser Abschnitt
- 17: Elektrische Steuerleitung
- 18: Kompressormodul
- 19: Schnellablassventil
- 20: Schnellentlüftungsleitung
- 21: Elektrische Steuerleitung
- 22: Hauptdruckleitung
- 23: Federbalg
- 24: Federbalg
- 25: Erstes Niveauregelventil für Federbalg 23
- 26: Erstes Niveauregelventil für Federbalg 24
- 27: Zweites Niveauregelventil für Federbalg 23
- 28: Zweites Niveauregelventil für Federbalg 24
- 29: Erste Anschlussleitung für Federbalg 23
- 30: Erste Anschlussleitung für Federbalg 24
- 31: Zweite Anschlussleitung für Federbalg 23
- 32: Zweite Anschlussleitung für Federbalg 24
- 33: Druckspeicher
- 34: Speicherventil
- 35: Anschlussleitung
- 36: Elektrische Steuerleitung
- 37: Elektrische Steuerleitung
- 38: Elektrische Steuerleitung
- 39: Elektrische Steuerleitung
- 40: Elektrische Steuerleitung
- 41: Drucksensor
- 42: Sensorleitung
- 43: Wegsensor
- 44: Wegsensor
- 45: Sensorleitung
- 46: Sensorleitung
- 47: Dreifach Ventilblock
- 48: Vierfach Ventilblock
- 49: Fünffach Ventilblock
- 50: Steuergerät
- n_{FB}: Anzahl der Federbälge
- NW_{A}: Düsenquerschnittsfläche von Ablassventil 10
- NW_{S}: Düsenquerschnittsfläche von Speicherventil 34
- NW_{X}: Düsenquerschnittsfläche von Niveauregelventil 25, 26
- NW_{Y}: Düsenquerschnittsfläche von Niveauregelventil 27, 28
- NW_{Z}: Düsenquerschnittsfläche von Drossel 8

## Patentansprüche

1. Luftfederungsanlage eines Kraftfahrzeugs, mit zumindest einem einer Luftfeder mindestens einer Fahrzeugachse zugeordneten Federbalg (23, 24), der über eine mit einem Niveauregelventil (25, 26) versehene Anschlussleitung (29, 30) mit einer Hauptdruckleitung (22) verbindbar und gegenüber dieser absperrbar ist, wobei die Hauptdruckleitung (22) über eine mit einem Kompressor (5) und einem Lufttrockner (7)
versehene Versorgungsleitung (9) belüftbar und über eine zwischen dem Kompressor
(5) und dem Lufttrockner (7) abzweigende und mit einem Ablassventil (10) versehene Entlüftungsleitung (11) entlüftbar ist, und wobei optional ein Druckspeicher (33) vorgesehen
ist, der über eine mit einem Speicherventil (34) versehene Anschlussleitung (35) mit der Hauptdruckleitung (22) verbindbar und gegenüber dieser absperrbar ist, wobei der zumindest eine Federbalg (23; 24) der mindestens an einer Fahrzeugachse oder mindestens an einer Fahrzeugseite angeordneten Luftfeder
über mindestens zwei parallele, jeweils mit einem Niveauregelventil (25, 27; 26, 28) versehene Anschlussleitungen (29, 31; 30, 32) mit der Hauptdruckleitung (22) verbindbar
und gegenüber dieser absperrbar ist, wobei das jeweilige Niveauregelventil (25, 27; 26, 28) zwischen der Hauptdruckleitung (22) und dem jeweils zugeordneten Federbalg (23;24) angeordnet ist, **dadurch gekennzeichnet, dass** durch eine singuläre oder kombinierte Öffnung der jeweils einem Federbalg (23; 24) zugeordneten Niveauregelventile (25, 27; 26, 28) mehrere Düsenquerschnittsflächen freigeschaltet werden und somit beim Be- und Entlüften der Federbälge (23; 24) unterschiedliche Luftmasseströme eingestellt werden können.

2. Luftfederungsanlage nach Anspruch 1, **dadurch gekennzeichnet, dass** die jeweils mindestens zwei Niveauregelventile (25, 27; 26, 28) der betreffenden Federbälge (23; 24) gleich große Düsenquerschnittsflächen aufweisen (NWX = NWY).

3. Luftfederungsanlage nach Anspruch 1, **dadurch gekennzeichnet, dass** die jeweils mindestens zwei Niveauregelventile (25, 27; 26, 28) der betreffenden Federbälge (23; 24) unterschiedlich große Düsenquerschnittsflächen aufweisen (NWX > NWY).

4. Luftfederungsanlage nach einem der Ansprüche 1 bis 3, **dadurch gekennzeichnet, dass** zumindest die zwei dem Federbalg (23; 24) einer einzigen Luftfeder zugeordneten
Niveauregelventile (25, 27; 26, 28) in einem gemeinsamen Ventilblock (48, 49) angeordnet sind.

5. Luftfederungsanlage nach einem der Ansprüche 1 bis 4, **dadurch gekennzeichnet, dass** dem Lufttrockner (7) in Belüftungsrichtung eine Drossel (8) nachgeschaltet ist, deren Drosselquerschnittsfläche größer als die Summe der Düsenquerschnittsflächen
aller Niveauregelventile (25, 26, 27, 28) ist.

6. Verfahren zur Steuerung einer Luftfederungsanlage (1a, 1b) eines Kraftfahrzeugs beim Be- und Entlüften von wenigstens einem Federbalg (23; 24), der zumindest der an einer Fahrzeugachse oder zumindest an einer Fahrzeugseite angeordneten Luftfeder
zugeordnet und jeweils über zwei parallele, jeweils mit einem Niveauregelventil (25, 27; 26, 28) versehene Anschlussleitungen (29, 31; 30, 32) mit einer Hauptdruckleitung (22) verbindbar sowie gegenüber dieser absperrbar ist, wobei das jeweilige Niveauregelventil (25, 27; 26, 28) zwischen der Hauptdruckleitung (22) und dem jeweils zugeordneten Federbalg (23;24) angeordnet ist, **dadurch gekennzeichnet, dass** durch eine singuläre oder kombinierte Öffnung der jeweils einem Federbalg (23; 24) zugeordneten Niveauregelventile (25, 27; 26, 28) mehrere Düsenquerschnittsflächen freigeschaltet werden und somit beim Be- und Entlüften der Federbälge (23; 24) unterschiedliche Luftmasseströme eingestellt werden können und bei der die jeweils zwei Niveauregelventile (25, 27; 26, 28) des betreffenden Federbalgs (23; 24) gleich große Düsenquerschnittsflächen aufweisen (NWX = NWY), wobei bei einem langsamen Absenken oder Anheben des Fahrzeugaufbaus an mindestens einer der Fahrzeugachsen
oder an mindestens einer Fahrzeugseite jeweils eines der beiden Niveauregelventile (25 oder 27; 26 oder 28) des betreffenden Federbalgs (23; 24) geöffnet wird.

7. Verfahren zur Steuerung einer Luftfederungsanlage nach Anspruch 6, **dadurch gekennzeichnet, dass** bei einem schnellen Absenken oder Anheben des Fahrzeugaufbaus
an mindestens einer der Fahrzeugachsen oder an mindestens einer Fahrzeugseite jeweils beide Niveauregelventile (25 und 27; 26 und 28) des betreffenden Federbalgs (23; 24) geöffnet werden.

8. Verfahren zur Steuerung einer Luftfederungsanlage eines Kraftfahrzeugs beim Be- und Entlüften von wenigstens einem Federbalg (23; 24), der zumindest einer an einer Fahrzeugachse oder zumindest an einer Fahrzeugseite angeordneten Luftfeder zugeordnet und jeweils über zwei parallele, jeweils mit einem Niveauregelventil (25, 27; 26, 28) versehene Anschlussleitungen (29, 31; 30, 32) mit einer Hauptdruckleitung (22)
verbindbar sowie gegenüber dieser absperrbar ist, **dadurch gekennzeichnet, dass** die jeweils zwei Niveauregelventile (25, 27; 26, 28) des betreffenden Federbalgs (23; 24) unterschiedlich große Düsenquerschnittsflächen aufweisen (NWX > NWY), wobei bei einem langsamen Absenken
oder Anheben des Fahrzeugaufbaus an mindestens einer der Fahrzeugachsen 22
oder an mindestens einer Fahrzeugseite jeweils dasjenige Niveauregelventil (27; 28) des betreffenden Federbalgs (23; 24) mit der kleineren Düsenquerschnittsfläche (NWY)
geöffnet wird.

9. Verfahren zur Steuerung einer Luftfederungsanlage nach Anspruch 8, **dadurch gekennzeichnet, dass** bei einem Absenken oder Anheben des Fahrzeugaufbaus an mindestens einer der Fahrzeugachsen oder an mindestens einer Fahrzeugseite mit mittlerer Stellgeschwindigkeit jeweils dasjenige Niveauregelventil (25; 26) des betreffenden
Federbalgs (23; 24) mit der größeren Düsenquerschnittsfläche (NWX) geöffnet wird.

10. Verfahren zur Steuerung einer Luftfederungsanlage nach Anspruch 8 oder 9, **dadurch gekennzeichnet, dass** bei einem schnellen Absenken oder Anheben des Fahrzeugaufbaus
an mindestens einer der Fahrzeugachsen oder an mindestens einer Fahrzeugseite jeweils beide Niveauregelventile (25 und 27; 26 und 28) des betreffenden Federbalgs (23; 24) geöffnet werden.

## Claims

1. Air suspension system of a motor vehicle, having at least one spring bellows (23, 24) assigned to an air spring of at least one vehicle axle, which spring bellows can be connected to a main pressure line (22) and blocked off with respect to the latter via a connecting line (29, 30) provided with a level control valve (25, 26), wherein the main pressure line (22) can be supplied with air via a supply line (9) provided with a compressor (5) and an air dryer (7), and can be vented via a vent line (11) that branches off between the compressor (5) and the air dryer (7) and is provided with a discharge valve (10), and wherein a pressure reservoir (33) is optionally provided, which can be connected to the main pressure line (22) and blocked off with respect to the latter via a connecting line (35) provided with a reservoir valve (34), wherein the at least one spring bellows (23; 24) of the air spring arranged at least at one vehicle axle or at least on one vehicle side can be connected to the main pressure line (22) and blocked off with respect to the latter via at least two parallel connecting lines (29, 31; 30, 32), each provided with a level control valve (25, 27; 26, 28), wherein the respective level control valve (25, 27; 26, 28) is arranged between the main pressure line (22) and the respectively assigned spring bellows (23; 24), **characterized in that**, through individual or combined opening of the level control valves (25, 27; 26, 28), each assigned to one spring bellows (23; 24), a plurality of nozzle cross-sectional areas are opened up and thus different air mass flows can be set up when supplying air to and venting air from the spring bellows (23; 24).

2. Air suspension system according to Claim 1, **characterized in that** the in each case at least two level control valves (25, 27; 26, 28) of the relevant spring bellows (23; 24) have nozzle cross-sectional areas of the same size (NWX = NWY).

3. Air suspension system according to Claim 1, **characterized in that** the in each case at least two level control valves (25, 27; 26, 28) of the relevant spring bellows (23; 24) have nozzle cross-sectional areas of different sizes (NWX > NWY).

4. Air suspension system according to one of Claims 1 to 3, **characterized in that** at least the two level control valves (25, 27; 26, 28) assigned to the spring bellows (23; 24) of a single air spring are arranged in a common valve block (48, 49).

5. Air suspension system according to one of Claims 1 to 4, **characterized in that** a restrictor (8), the throttling cross-sectional area of which is greater than the sum of the nozzle cross-sectional areas of all the level control valves (25, 26, 27, 28), is arranged downstream of the air dryer (7) in the direction of air supply.

6. Method for controlling an air suspension system (1a, 1b) of a motor vehicle when supplying air to and venting air from at least one spring bellows (23; 24), which is assigned at least to the air spring arranged at one vehicle axle or at least on one vehicle side and can be connected to a main pressure line (22) and blocked off with respect to the latter in each case via two parallel connecting lines (29, 31; 30, 32), each provided with a level control valve (25, 27; 26, 28), wherein the respective level control valve (25, 27; 26, 28) is arranged between the main pressure line (22) and the respectively assigned spring bellows (23; 24), **characterized in that**, through individual or combined opening of the level control valves (25, 27; 26, 28), each assigned to one spring bellows (23; 24), a plurality of nozzle cross-sectional areas are opened up and thus different air mass flows can be set up when supplying air to and venting air from the spring bellows (23; 24), and in which the in each case two level control valves (25, 27; 26, 28) of the relevant spring bellows (23; 24) have nozzle cross-sectional areas of the same size (NWX = NWY), wherein in each case one of the two level control valves (25 or 27; 26 or 28) of the relevant spring bellows (23; 24) is opened when lowering or raising the vehicle body slowly at at least one of the vehicle axles or on at least one vehicle side.

7. Method for controlling an air suspension system according to Claim 6, **characterized in that** in each case both level control valves (25 and 27; 26 and 28) of the relevant spring bellows (23; 24) are opened when lowering or raising the vehicle body quickly at at least one of the vehicle axles or on at least one vehicle side.

8. Method for controlling an air suspension system of a motor vehicle when supplying air to and venting air from at least one spring bellows (23; 24), which is assigned at least to an air spring arranged at one vehicle axle or at least on one vehicle side and can be connected to a main pressure line (22) and blocked off with respect to the latter in each case via two parallel connecting lines (29, 31; 30, 32), each provided with a level control valve (25, 27; 26, 28), **characterized in that** the in each case two level control valves (25, 27; 26, 28) of the relevant spring bellows (23; 24) have nozzle cross-sectional areas of different sizes (NWX > NWY), wherein in each case the level control valve (27; 28) of the relevant spring bellows (23; 24) which has the smaller nozzle cross-sectional area (NWY) is opened when lowering or raising the vehicle body slowly at at least one of the vehicle axles 22 or on at least one vehicle side.

9. Method for controlling an air suspension system according to Claim 8, **characterized in that** in each case the level control valve (25; 26) of the relevant spring bellows (23; 24) which has the larger nozzle cross-sectional area (NWX) is opened when lowering or raising the vehicle body at at least one of the vehicle axles or on at least one vehicle side with a moderate speed of adjustment.

10. Method for controlling an air suspension system according to Claim 8 or 9, **characterized in that** in each case both level control valves (25 and 27; 26 and 28) of the relevant spring bellows (23; 24) are opened when lowering or raising the vehicle body quickly at at least one of the vehicle axles or on at least one vehicle side.

## Revendications

1. Système de suspension pneumatique d'un véhicule automobile, comprenant au moins un soufflet (23, 24) associé à un ressort pneumatique d'au moins un essieu de véhicule, qui peut être relié à une conduite de pression principale (22) par le biais d'une conduite de raccordement (29, 30) pourvue d'une soupape de régulation de niveau (25, 26) et qui peut être bloqué par rapport à celle-ci, la conduite de pression principale (22) pouvant être ventilée par le biais d'une conduite d'alimentation (9) pourvue d'un compresseur (5) et d'un sécheur d'air (7) et pouvant être désaérée par le biais d'une conduite de désaérage (11) s'embranchant entre le compresseur (5) et le sécheur d'air (7) et pourvue d'une soupape d'échappement (10), et, en option, un accumulateur de pression (33) étant prévu, lequel peut être raccordé à la conduite de pression principale (22) par le biais d'une conduite de raccordement (35) pourvue d'une soupape d'accumulateur (34) et pouvant être bloqué par rapport à celle-ci,
l'au moins un soufflet (23 ; 24) du ressort pneumatique disposé au moins au niveau d'un essieu de véhicule ou au moins sur un côté du véhicule pouvant être raccordé à la conduite de pression principale (22) par le biais d'au moins deux conduites de raccordement parallèles (29, 31 ; 30, 32) pourvues chacune d'une soupape de régulation de niveau (25, 27 ; 26, 28), et pouvant être bloqué par rapport à celle-ci, la soupape de régulation de niveau respective (25, 27 ; 26, 28) étant disposée entre la conduite de pression principale (22) et le soufflet respectivement associé (23 ; 24), **caractérisé en ce que** plusieurs surfaces en section transversale de buses peuvent être ouvertes par une ouverture unique ou combinée des soupapes de régulation de niveau (25, 27 ; 26, 28) respectivement associées à un soufflet (23 ; 24) et de ce fait, différents débits massiques d'air peuvent être ajustés lors de la ventilation et du désaérage des soufflets (23 ; 24).

2. Système de suspension pneumatique selon la revendication 1, **caractérisé en ce que** les au moins deux soupapes de régulation de niveau respectives (25, 27 ; 26, 28) des soufflets concernés (23 ; 24) présentent des surfaces en section transversale de buse identiques (NWX = NWY).

3. Système de suspension pneumatique selon la revendication 1, **caractérisé en ce que** les au moins deux soupapes de régulation de niveau respectives (25, 27 ; 26, 28) des soufflets concernés (23 ; 24) présentent des surfaces en section transversale de buse différentes (NWX > NWY).

4. Système de suspension pneumatique selon l'une quelconque des revendications 1 à 3, **caractérisé en ce qu'**au moins les deux soupapes de régulation de niveau (25, 27 ; 26, 28) associées au soufflet (23 ; 24) d'un ressort pneumatique unique sont disposées dans un bloc de soupape commun (48, 49).

5. Système de suspension pneumatique selon l'une quelconque des revendications 1 à 4, **caractérisé en ce qu'**un étranglement (8) est monté en aval du sécheur d'air (7) dans la direction de ventilation, dont la surface en section transversale d'étranglement est supérieure à la somme des surfaces en section transversale de buse de toutes les soupapes de régulation de niveau (25, 26, 27, 28).

6. Procédé de commande d'un système de suspension pneumatique (1a, 1b) d'un véhicule automobile lors de la ventilation et du désaérage d'au moins un soufflet (23 ; 24), qui est associé au moins au ressort pneumatique disposé au niveau d'un essieu du véhicule ou au moins sur un côté du véhicule et qui peut être relié à une conduite de pression principale (22) à chaque fois par le biais de deux conduites de raccordement parallèles (29, 31 ; 30, 32) à chaque fois pourvues d'une soupape de régulation de niveau (25, 27 ; 26, 28) et qui peut être bloqué par rapport à celle-ci, dans lequel la soupape de régulation de niveau respective (25, 27 ; 26, 28) est disposée entre la conduite de pression principale (22) et le soufflet respectivement associé (23 ; 24), **caractérisé en ce que** plusieurs surfaces en section transversale de buses sont ouvertes par une ouverture unique ou combinée des soupapes de régulation de niveau (25 27 ; 26, 28) respectivement associées à un soufflet (23 ; 24) et de ce fait, lors de la ventilation et du désaérage des soufflets (23 ; 24), différents débits massiques d'air peuvent être ajustés et lors de celle-ci les deux soupapes de régulation de niveau respectives (25, 27 ; 26, 28) du soufflet concerné (23 ; 24) présentent des surfaces en section transversale de buse identiques (NWX = NWY), où, dans le cas d'un abaissement ou d'un soulèvement lent de la caisse du véhicule au niveau d'au moins l'un des essieux du véhicule ou au niveau d'au moins un côté du véhicule, à chaque fois l'une des deux soupapes de régulation de niveau (25 ou 27 ; 26 ou 28) du soufflet concerné (23 ; 24) est ouverte.

7. Procédé de commande d'un système de suspension pneumatique selon la revendication 6, **caractérisé en ce que** dans le cas d'un abaissement ou d'un soulèvement rapide de la caisse du véhicule au niveau d'au moins l'un des essieux du véhicule ou au niveau d'au moins un côté du véhicule, à chaque fois deux soupapes de régulation de niveau (25 et 27 ; 26 et 28) du soufflet concerné (23 ; 24) sont ouvertes.

8. Procédé de commande d'un système de suspension pneumatique d'un véhicule automobile lors de la ventilation et du désaérage d'au moins un soufflet (23 ; 24), qui est associé à au moins un ressort pneumatique disposé au niveau d'un essieu du véhicule ou au niveau d'au moins un côté du véhicule, et qui peut être relié à une conduite de pression principale (22) à chaque fois par le biais de deux conduites de raccordement parallèles (29, 31 ; 30, 32) pourvues d'une soupape de régulation de niveau respective (25, 27 ; 26, 28), ainsi que bloqué par rapport à celle-ci, **caractérisé en ce que** les deux soupapes de régulation de niveau respectives (25, 27 ; 26, 28) du soufflet concerné (23 ; 24) présentent des surfaces en section transversale de buse différentes (NWX > NWY), dans le cas d'un abaissement ou d'un soulèvement lent de la caisse du véhicule au niveau d'au moins l'un des axes de véhicule 22 ou au niveau d'au moins un côté du véhicule, à chaque fois la soupape de régulation de niveau (27 ; 28) du soufflet concerné (23 ; 24) ayant la plus petite surface en section transversale de buse (NWY) étant ouverte.

9. Procédé de commande d'un système de suspension pneumatique selon la revendication 8, **caractérisé en ce que** dans le cas d'un abaissement ou d'un soulèvement de la caisse du véhicule au niveau d'au moins l'un des essieux du véhicule ou au niveau d'au moins un côté du véhicule avec une vitesse de réglage moyenne, à chaque fois la soupape de régulation de niveau (25 ; 26) du soufflet concerné (23 ; 24) ayant la plus grande surface en section transversale de buse (NWX) est ouverte.

10. Procédé de commande d'un système de suspension pneumatique selon la revendication 8 ou 9, **caractérisé en ce que** dans le cas d'un abaissement ou d'un soulèvement rapide de la caisse du véhicule au niveau d'au moins l'un des essieux du véhicule ou au niveau d'au moins un côté du véhicule, à chaque fois les deux soupapes de régulation de niveau (25 et 27 ; 26 et 28) du soufflet concerné (23 ; 24) sont ouvertes.
